# DEMANDE DE BREVET EUROPEEN

(11) **EP 1 061 306 A1**
(43) Date de publication de la demande: **20.12.2000**
(21) Numéro de dépôt: 00400997.3
(22) Date de dépôt: 11.04.2000
(51) Int. Cl.: F17C 1/08, B65D 88/06

(54) **Réservoir résistant à la pression dont la forme s'adapte à la place dont on dispose pour le loger**

(30) Priorité: 15.06.1999 FR 9907534
(71) Demandeur: Société Metallurgique Liotard Frères, Société Anonyme, 75008 Paris (FR)
(72) Inventeur: Dailloux, Alain, 37230 Fondettes (FR)
(74) Mandataire: Eidelsberg, Victor Albert

(57) **Abrégé**

Dans ce réservoir résistant à la pression, la médiatrice (9) d'un C (1) fait un angle (a) aigu avec la droite (13) passant par les milieux (14, 15) des perpendiculaires à la médiatrice (9) issues des extrémités des arcs (11, 12).

## Description

La présente invention se rapporte à un réservoir résistant à la pression, notamment à un réservoir de gaz de pétrole liquéfié destiné à être monté dans un véhicule automobile.

On connaît déjà par la demande de brevet de la République Fédérale d'Allemagne publiée sous le n° 3206430 un réservoir résistant à la pression qui est sous la forme d'au moins un profilé. Le contour de la section transversale a la forme de deux C. Chaque extrémité d'un C est reliée à une extrémité correspondante de l'autre C par une ligne ayant au moins un arc convexe. La conformation de ce réservoir est telle que, tout en ayant une capacité suffisante, il peut se loger même dans des espaces étroits, par exemple entre les sièges arrières et le coffre d'un véhicule automobile.

L'invention vise un réservoir de ce genre qui peut, mieux encore que le réservoir décrit dans le document antérieur mentionné ci-dessus, s'adapter à l'espace qu'on souhaite lui réserver dans un véhicule automobile.

Suivant l'invention, en section transversale, la médiatrice d'un C fait un angle aigu avec la droite passant par les milieux des perpendiculaires à la médiatrice issues des extrémités des arcs. En renonçant ainsi à la symétrie de révolution qui caractérise jusqu'ici tous les réservoirs résistant à la pression de la technique antérieure telle qu'elle est jalonnée notamment, par exemple par le brevet du Royaume-Uni de Grande-Bretagne et d'Irlande n° 2 089 014, la demande de brevet allemande mise à l'inspection au public sous le n° 1229048, le brevet français n° 2 621 098 et la demande de brevet français n° 97 09732, on peut, tout en ayant la possibilité de fabriquer des réservoirs relativement aplatis à l'aide de profilés, en adapter au mieux la forme à l'espace dont on dispose, l'absence de symétrie ne portant pas pour autant préjudice à la résistance à la pression qui reste assurée par le contour composé d'arcs convexes de la section transversale qui peuvent être renforcés par des points de soudure aux jonctions entre les arcs convexes.

Pour s'adapter encore au mieux à l'espace disponible, les deux C peuvent avoir des dimensions différentes, notamment des hauteurs différentes ou des largeurs différentes où l'un ou l'autre peuvent être aplatis. De même, la convexité d'un arc de l'une des lignes peut différer de celle de l'arc de l'autre ligne.

Le profilé ou les profilés sont fermés en bout par des couvercles soudés. Lorsque le réservoir est sous la forme de plusieurs profilés accolés, l'un des profilés peut avoir une longueur différente de celle d'un autre profilé, ce qui permet encore d'en adapter la forme au mieux à l'espace disponible. Dans ce cas, les profilés qui n'ont pas la même longueur sont munis chacun de leur propre couvercle soudé de fermeture des faces frontales.

Au dessin annexé, donné uniquement à titre d'exemple :
la figure 1 est une vue en coupe d'un réservoir suivant l'invention,
les figures 2 et 3 sont des vues en coupe de variante de la figure 1,
la figure 4 est une vue en coupe d'un autre mode de réalisation d'un réservoir suivant l'invention, et
la figure 5 est une vue en coupe d'une variante du réservoir de la figure 4.

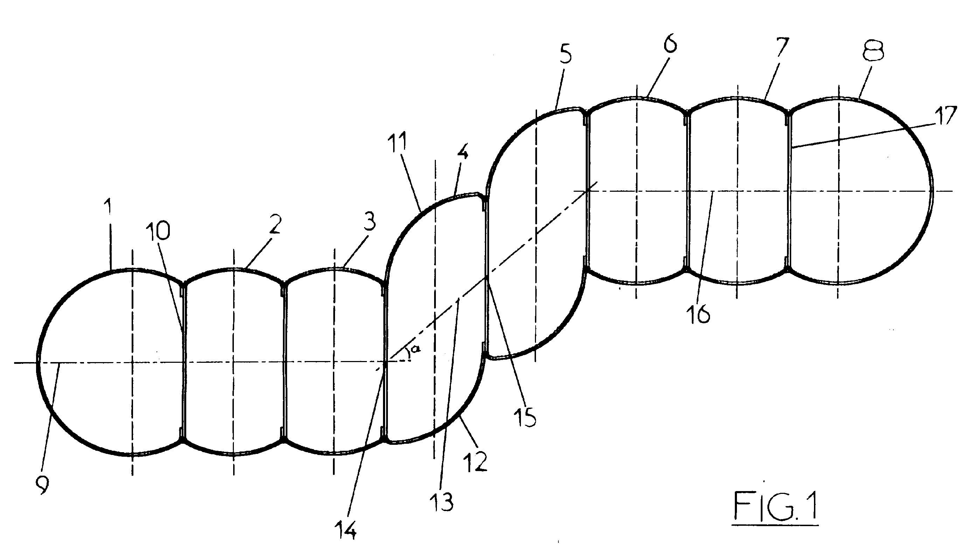

Le réservoir résistant à la pression représentée à la figure 1 est en acier. Il est constitué de huit profilés 1 à 8 accolés, ce qui lui donne une forme sensiblement aplatie. Les profilés sont fermés à leurs deux faces frontales par un couvercle soudé qui leur est commun. Le profilé 1 a en section transversale la forme d'un C. Il admet un plan médiateur dont la trace dans la section transversale correspond à la médiatrice 9 imaginaire. Aux extrémités du profilé 1 en C sont soudées les deux branches du profilé 2 en forme de U, l'âme 10 de ce profilé formant une cloison séparant l'intérieur des profilés 1 et 2, cette cloison pouvant comporter une ouverture de passage pour mettre l'intérieur des deux profilés 1 et 2 en communication. Le profilé 3 également en forme de U est soudé lui aussi aux extrémités libres du profilé 2. Le profilé 4 comporte deux arcs 11, 12 convexes. La droite 13 passant par les milieux 14, 15 des perpendiculaires à la médiatrice 9 issues des extrémités des arcs 11 et 12 et donc par les âmes du U des profilés 4 et 5 fait un angle a de 45° avec la médiatrice 9. Le profilé 5 est disposé à la suite du profilé 4 en étant incliné comme lui, comme indiqué ci-dessus, tandis que les profilés 6 et 7 reviennent en ayant une médiatrice 16 commune avec le profilé 8 en C qui, en section transversale, est fermée par une hampe 17.

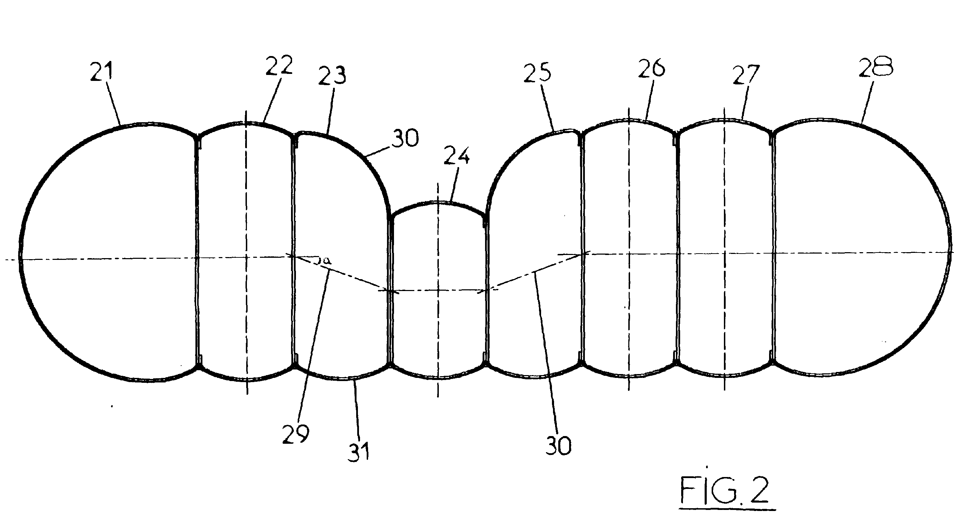

A la figure 2, on retrouve huit profilés 21, 22, 23, 24, 25, 26, 27 et 28, mais cette fois-ci il a été intercalé, entre les profilés 23 et 25 dont les lignes médianes 29 et 30 sont inclinées par rapport à la médiatrice des C, un profilé 24 dont la ligne médiane est parallèle à la médiatrice des C tout en étant décalé vers le bas et la convexité des deux arcs 30, 31 du profilé 23, tout comme celle des deux arcs opposés du profilé 25, est différente.

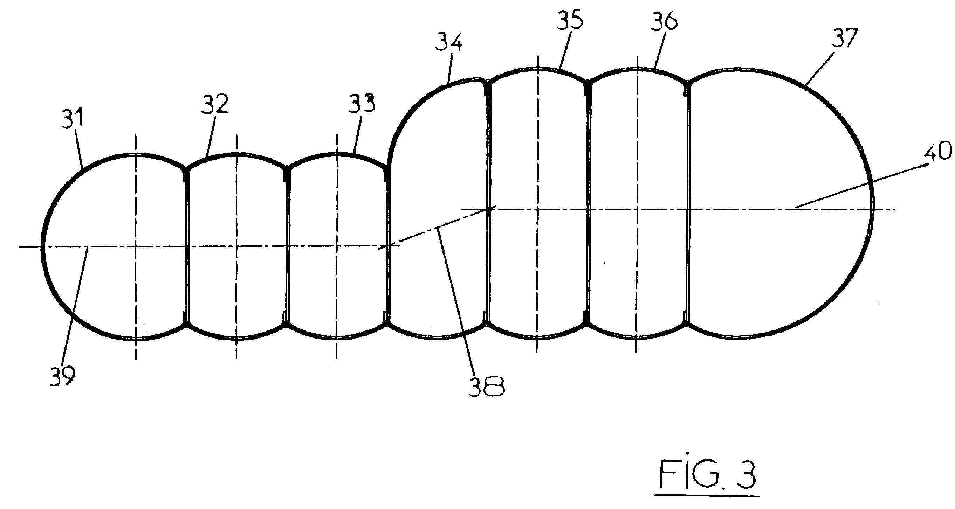

A la figure 3, il est prévu sept profilés 31 à 37, le profilé 34 ayant une ligne médiane 38 qui fait un angle avec tant la médiatrice 39 du C 31 que la médiatrice 40 du profilé en C 37 lequel a de plus grandes dimensions que le profilé 31 en C.

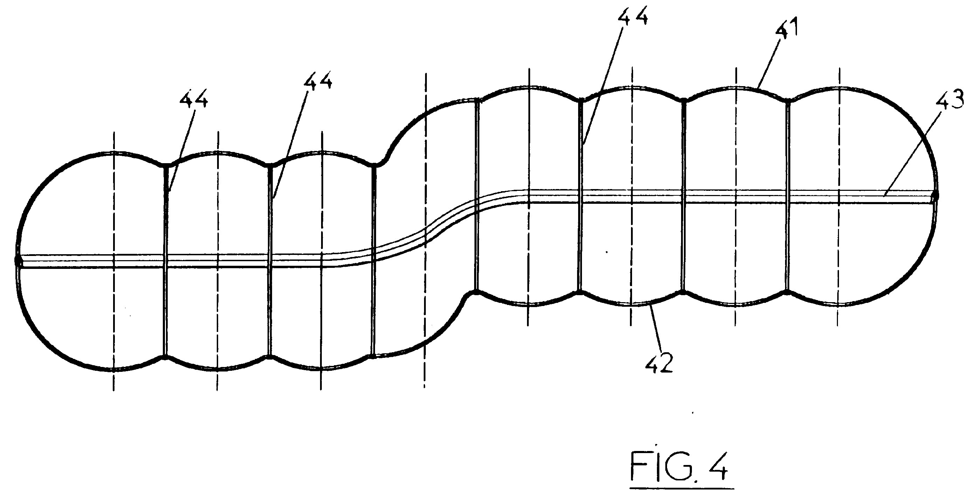

La figure 4 illustre un autre mode de réalisation de l'invention. Dans ce cas, le réservoir est constitué de deux pièces l'une 41 supérieure et l'autre 42 inférieure soudées par leur bord 43 en regard, des parois 44 étant prévues entre les compartiments et étant munies d'ouverture permettant la communication entre les compartiments.

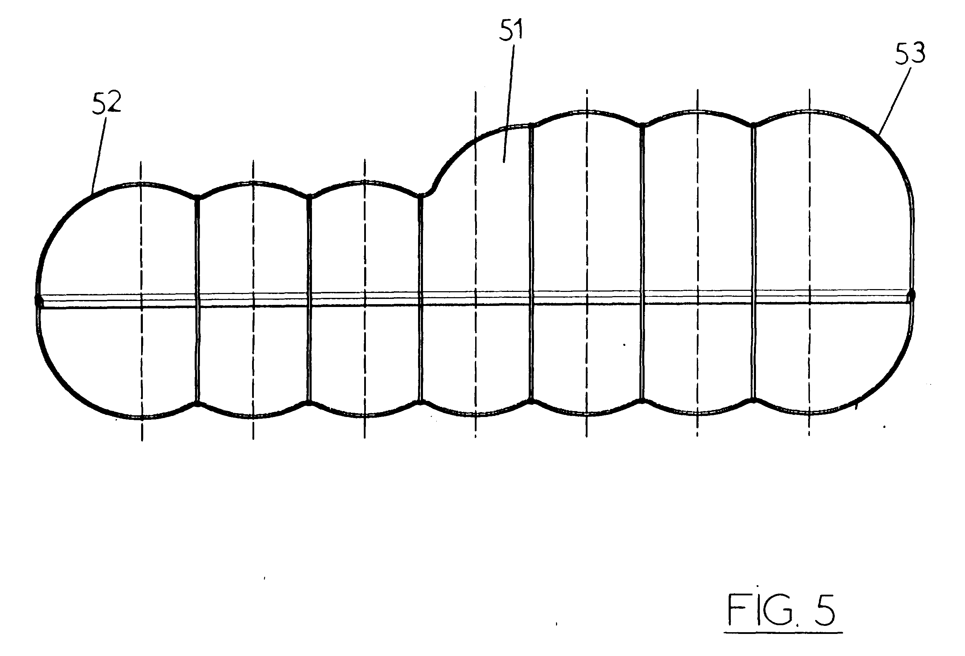

La figure 5 illustre une variante du mode de réalisation de la figure 4 avec la différence que le quatrième compartiment 51 a des arcs de convexité différente et que les deux parties 52, 53 d'extrémité en forme de C ont des dimensions différentes, le C 53 étant de plus aplati en ayant donc une largeur qui n'est pas supérieure à celle du C 52, alors qu'il a pourtant une plus grande hauteur.

## Revendications

1. Réservoir résistant à la pression sous la forme d'au moins un profilé dont le contour de la section transversal a la forme de deux C, chaque extrémité d'un C étant reliée à une extrémité correspondante de l'autre C par une ligne ayant au moins un arc convexe, caractérisé en ce que, en section transversale, la médiatrice (9) d'un C (1) fait un angle (a) aigu avec la droite (13) passant par les milieux (14, 15) des perpendiculaires à la médiatrice (9) issues des extrémités des arcs (11, 12).

2. Réservoir suivant la revendication 1, caractérisé en ce que les deux C ont des dimensions différentes.

3. Réservoir suivant la revendication 1 ou 2, caractérisé en ce que la convexité d'un arc diffère de celle de l'autre arc.

4. Réservoir suivant l'une des revendications 1 à 3, caractérisé en ce qu'il est sous la forme de plusieurs profilés accolés, l'un des profilés ayant une longueur différente de celle d'un autre profilé.
